# EUROPÄISCHE PATENTSCHRIFT

(11) **EP 4 264 108 B1**
(45) Veröffentlichungstag und Bekanntmachung des Hinweises auf die Patenterteilung: **29.01.2025**
(21) Anmeldenummer: 21801111.2
(22) Anmeldetag: 26.10.2021
(51) Int. Cl.: F16L 55/165, E02D 29/12, F16L 11/04

(54) **AUSKLEIDUNGSSCHLAUCH ZUR SANIERUNG VON DEFEKTEN KANALSCHÄCHTEN UND VERFAHREN ZUR HERSTELLUNG SOWIE INSTALLATION EINES SOLCHEN**
LINING TUBE FOR RESTORING DEFECTIVE SEWER SHAFTS AND METHOD FOR PRODUCING AND INSTALLING SAME
TUBE DE REVÊTEMENT POUR LA RESTAURATION D'ARBRES D'ÉGOUT DÉFECTUEUX ET SON PROCÉDÉ DE FABRICATION ET D'INSTALLATION

(30) Priorität: 18.12.2020 DE 102020134224
(43) Veröffentlichungstag der Anmeldung: 25.10.2023
(73) Patentinhaber: Brandenburger Liner GmbH & Co. KG, 76829 Landau (DE)
(72) Erfinder: BLENKE, Stefan, 76829 Landau (DE); EBELING, Milan, 76829 Landau (DE)
(74) Vertreter: Kesselhut, Wolf
(86) Internationale Anmeldenummer: PCT/EP2021/079672
(87) Internationale Veröffentlichungsnummer: WO 2022/128217

(56) Entgegenhaltungen:
- EP-A1- 0 787 940
- WO-A1-2012/159702
- US-A- 5 106 440
- US-A1- 2006 151 042
- US-A1- 2016 305 579

## Beschreibung

Die Erfindung betrifft einen Auskleidungsschlauch zur Sanierung von defekten Kanalschächten und ein Verfahren zur Herstellung sowie zur Installation eines solchen gemäß Anspruch 1, 8 und 10.

Auf dem Gebiet der grabenlosen Sanierung von defekten Rohrleitungen, wie z.B. defekten Abwasserkanälen, werden zunehmend Auskleidungsschläuche eingesetzt, die eine oder mehrere Lagen aus einem mit einem flüssigem Reaktionsharz getränkten Glasfaserlaminat aufweisen, welches in Form von überlappend gewickelten oder gelegten Faserbändem um einen Innenfolienschlauch herum angeordnet ist. Auf der Außenseite ist das Laminat von einem Außenfolienschlauch umgeben, der einen Austritt von schädlichen Substanzen, insbesondere von Styrol, aus dem Reaktionsharz in das Erdreich verhindert. Die Auskleidungsschläuche, die auch als Inliner bezeichnet werden, werden in einen zu sanierenden Kanal eingezogen, nach dem Einziehen an ihren Enden mit Hilfe von Packern verschlossen und mittels Druckluft expandiert und durch Licht einer UV-Strahlungsquelle, oder alternativ durch Einleiten von Heißdampf, ausgehärtet.

Ein zuvor genannter Auskleidungsschlauch sowie ein Verfahren zur Herstellung eines solchen sind beispielsweise aus der WO-A 95/04646 bekannt.

Um beim Expandieren der Auskleidungsschläuche eine bestmögliche Anlage derselben an die Kanalinnenwände zu erhalten, welche die Grundvoraussetzung für eine hohe maximale mechanische Belastbarkeit darstellt, werden diese üblicherweise mit einem Außendurchmesser gefertigt, der 5 bis 10 % geringer ist als der Innendurchmesser DN des zu sanierenden Kanalrohrs. Dieses geringfügige Untermaß führt aufgrund der zusätzlichen Dehnung des Auskleidungsschlauchs beim Expandieren zu einer verbesserten Oberflächengüte des ausgehärteten Laminats und erlaubt es, geringfügige Durchmesseränderungen eines Kanalrohrs auszugleichen. Eine Dehnbarkeit von mehr als 10 % ist bei den bekannten Auskleidungsschläuchen des Standes der Technik wie beispielsweise denen der WO-A 95/04646, hingegen nicht möglich, da sich hierdurch die Gefahr ergibt, dass die empfindliche transparente Innenfolie überdehnt und beschädigt wird, sodass die beim Expandieren eingeleitete Druckluft durch die beschädigte Innenfolie hindurch in das Laminat austritt und das flüssige Reaktionsharz an der entsprechenden Stelle ausbläst. Dies führt nach dem Aushärten des Reaktionsharzes in der Regel zu einer mechanischen Schwachstelle und Undichtigkeit, die, wenn überhaupt, nur mit großem Aufwand ermittelt und beseitigt werden kann.

Auf der anderen Seite ist es jedoch in der Praxis ebenfalls nicht möglich, die zuvor beschriebenen Auskleidungsschläuche mit einem Durchmesser zu fertigen, der größer als der Innendurchmesser des zu sanierenden Kanalrohres ist, da das Laminat und der Außenfolienschlauch in diesem Falle Falten schlagen, die im sanierten Kanal unerwünscht sind und die bei der Aushärtung mittels UV-Licht zu einer Schattenbildung führen, welche bei größeren Wanddicken eine vollständige Durchhärtung des Reaktionsharzes verhindert.

Aus den zuvor genannten Gründen werden bei der Sanierung von Rohrleitungen mit einem Durchmesser DN zwischen 150 mm und 1000 mm mehr als 40 verschiedene Grund-Typen von Auskleidungsschläuchen mit einem jeweiligen Nenndurchmesser DN und einem jeweils speziell gefertigten Innenfolienschlauch benötigt, um für jeden Kanaldurchmesser einen optimal angepassten Auskleidungsschlauch bereitzustellen, der nach dem Einziehen, Expandieren und Aushärten eine maximale mechanische Festigkeit und Dichtheit garantiert. Es versteht sich, das das Vorhalten einer entsprechenden Anzahl von in der Regel nahtlosen Innenfolienschläuchen, sowie die auf diesem aufbauende individuelle Fertigung des Laminats mit einem entsprechenden Durchmesser einen großen logistischen Aufwand darstellt, der die Produktion der Auskleidungsschläuche teuer macht.

Eine weitere Unzulänglichkeit der bekannten Auskleidungsschläuche ist darin zu sehen, dass Kanalrohre, bei denen sich der Innendurchmesser an einer sogenannten Haltung beispielsweise von DN 300 auf DN 400 sprunghaft ändert, mit den zuvor beschriebenen bekannten Auskleidungsschläuchen nur mit großen Unsicherheiten, bzw. mit großem Aufwand durch Einziehen und Verbinden zweier separater Auskleidungsschläuche mit einem entsprechenden Durchmesser auskleiden lassen.

Kanalschächte müssen in gleicher Weise saniert werden wie Rohrleitungen. Es bietet sich an, dafür die gleichen Verfahren einzusetzen. Allerdings haben Kanalschächte gegenüber Rohrleitungen, wie Abwasserrohren, die Besonderheit, dass diese vertikal verlaufen und in ihrem Durchmesser nicht konstant sind. Kanalschächte, oder allgemein Schachtbauwerke haben in der Regel einen kürzeren oberen Abschnitt, der sich von der oberen Schachtöffnung aus in vertikaler Richtung nach unten erstreckt, einen sich daran anschließenden konischen Übergangsabschnitt und einen sich an den konischen Übergangsabschnitt anschließenden längeren unteren, üblicherweise zylindrischen Abschnitt mit einem großem Durchmesser, der sich bis zur Sohle des Schachtes hinab erstreckt. Der untere zylindrische Schachtabschnitt hat z.B. einen Durchmesser von 1.000mm, der sich über den konischen Übergangsabschnitt hinweg auf einen Durchmesser von z.B. 600mm im Bereich der oberen Öffnung verjüngt. Da Kanalschächte oder allgemein Schachtbauwerke keiner Norm unterliegen, existieren eine Vielzahl von unterschiedlichen Ausführungsformen, die sich in ihrer Länge, ihrem Durchmesser und der Konusform unterscheiden.

Für die Sanierung von Kanalschächten wird seit langem die gleiche Technik eingesetzt, die auch bei der Sanierung der zuvor beschriebenen Rohrleitungen und Kanäle zum Einsatz gelangt. Obgleich die senkrechte Ausrichtung der Kanalschächte für den Einsatz eines zuvor beschriebenen Auskleidungsschlauchs für Rohrleitungen weniger problematisch ist, ergibt sich beim Einbau die Schwierigkeit, dass der Durchmessersprung zwischen dem oberen und dem unteren Kanalabschnitt sehr groß ist und von herkömmlichen Linern, die eine maximale Dehnung von bis zu 10 % des Grunddurchmessers erlauben, nicht abgedeckt werden kann, ohne dass die Gefahr besteht, dass der empfindliche Innenfolienschlauch und auch die Wicklung des Glasfaserbandes überdehnt und dadurch beschädigt wird.

Aus der WO 2013/139892 A1 ist es in diesem Zusammenhang bekannt, Auskleidungsschläuche für die Sanierung von Kanalschächten auf einem Wickeldorn mit endlicher Länge zu wickeln, der eine positive Form des Schachtbauwerks mit einem konischen Übergangsabschnitt ist. Obgleich die in der Weise hergestellten Auskleidungsschläuche eine Sanierung von Kanalschächten mit vergleichsweise großen Durchmessersprüngen von mehr als 50 % erlauben, besitzen diese die Unzulänglichkeit, dass für jede Ausführungsform ein individueller Wickeldorn gefertigt werden muss, was die Herstellungskosten extrem erhöht.

Weiterhin beschreibt die WO 2012/159702 A1 einen Auskleidungsschlauch zur Sanierung von Kanälen, der eine in Umfangsrichtung dehnbare, mit einem durch UV-Licht härtbaren Reaktionsharz getränkte Verstärkungslage sowie einen die Verstärkungslage umgebenden Außenfolienschlauch besitzt, um den herum ein für UV-Licht undurchlässiger Schutzschlauch aus einem reißfesten Werkstoff, wie dem Material einer LKW-Plane, angeordnet ist. Um den Auskleidungsschlauch nach dem Einziehen in einen Kanal radial expandieren zu können, so dass sich dieser vor dem Aushärten mittels einer hindurchgeführten UV-Lichtquelle an die Innenseite der Kanalwand anleget, weist der Schutzschlauch einen sich in dessen Längsrichtung erstreckenden Verbindungsabschnitt auf der durch Einleiten von Druckluft in den Auskleidungsschlauch in Umfangsrichtung dehnbar ist. Obgleich das Dokument die grundsätzliche Möglichkeit beschreibt, dass der Auskleidungsschlauch nicht nur durch Einziehen, sondern auch durch Invertieren in den zu sanierenden Kanal eingebracht werden kann, gibt das Dokument keinen Hinweis darauf, den Schutzschlauch aus einem für UV-Licht transparenten Material zu fertigen, durch das hindurch das Reaktionsharz mit Hilfe einer UV-Lichtquelle ausgehärtet werden kann.

Demgemäß ist es eine Aufgabe der vorliegenden Erfindung, einen Auskleidungsschlauch zu schaffen, welcher es ermöglicht, Kanalschächte mit jeweils unterschiedlichen Innendurchmessern mit ein und demselben Auskleidungsschlauch zu sanieren.

Diese Aufgabe wird erfindungsgemäß durch einen Auskleidungsschlauch mit den Merkmalen von Anspruch 1 gelöst.

Eine weitere Aufgabe der Erfindung ist es, ein Verfahren zu schaffen, mit welchem sich ein solcher Auskleidungsschlauch fertigen lässt.

Diese Aufgabe wird erfindungsgemäß durch ein Verfahren mit den Merkmalen von Anspruch 8 gelöst.

Eine abermals weitere Aufgabe der Erfindung ist es, ein Verfahren zu schaffen, mit dem ein solcher Auskleidungsschlauch in einem defekten Kanalschacht installiert werden kann.

Diese Aufgabe wird erfindungsgemäß durch ein Verfahren mit den Merkmalen von Anspruch 10 gelöst.

Weitere Merkmale der Erfindung sind in den Unteransprüchen beschrieben.

Nach dem der Erfindung zugrunde liegenden Gedanken ist ein im Querschnitt kreisförmiger, zylindrischer Auskleidungsschlauch so ausgestaltet, dass er sich beim Expandieren an die unterschiedlichen Durchmesser eines Kanalschachts anpassen kann. Dies ermöglicht es, den Auskleidungsschlauch, wie in der WO-A 95/04646 beschrieben, als endlosen Schlauch zu fertigen, so dass dieser vom Anwender vor Ort auf der Baustelle in mehrere einzelne Teilschläuche zerteilt werden kann, die jeweils eine der Tiefe des zu sanierenden Kanalschachts entsprechende Länge besitzen.

Der Auskleidungsschlauch umfasst hierzu in gleicher Weise wie ein Auskleidungsschlauch zur Sanierung von herkömmlichen horizontal verlaufenden Kanälen und Rohrleitungen einen Innenfolienschlauch, auf welchem wenigstens eine Lage eines schraubenförmig gewickelten oder alternativ auch umfänglich gelegten Faserbandes, insbesondere eines Glasfaserbandes oder Glasfaservlieses angeordnet ist, welches mit einem flüssigen Reaktionsharz getränkt ist, das durch UV-Licht ausgehärtet werden kann. Darauf folgt bevorzugt ein in Längsrichtung orientiertes Glasfaserband (Längszugband), welches die Zugkräfte beim Einbau des nachfolgend auch als "Liner" bezeichneten Auskleidungsschlauchs in einen Kanalschacht abträgt.

Um die durch das harzgetränkte Faserband geformte, umfänglich geschlossene Schicht herum ist bevorzugt ein Außenfolienschlauch angeordnet, der eine der Lage aus Fasermaterial zugewandte Vlieslage aufweisen kann, die auf eine zur Bildung des Außenfolienschlauchs verwendete Kunststofffolie aufkaschiert ist. Um den Außenfolienschlauch herum, der bevorzugt aus einer Mehrlagenfolie mit einer Styrolbarriere gefertigt ist, insbesondere eine PE-PA-PE Folie, auf deren innenliegende PE-Lage die Vliesschicht durch einen Schmelzvorgang aufkaschiert ist, ist bevorzugt eine reißfeste, bevorzugt gewebeverstärkte Schutzfolie angeordnet, die einen Aufbau und Materialeigenschaften wie eine LKW-Plane oder eine reißfeste Verpackungsfolie besitzt, und deren Längsränder über die Länge des Auskleidungsschlauchs hinweg z.B. durch Klebeband oder einen aufgeschweißten oder aufgeklebten elastischen Folienabschnitt verbunden sind. Dieser elastische Folienabschnitt, der auch durch einen Streifen Klebeband mit einer entsprechenden Breite gebildet werden kann, wird beim Expandieren des Auskleidungsschlauchs nach Art einer Sollbruchstelle aufgetrennt und erlaubt dadurch eine radiale Dehnung des ansonsten reißfesten und nahezu nicht dehnbaren äußeren Schutzschlauchs auf den jeweiligen Innendurchmesser des Kanalschachts. Die Sollbruchstelle kann aber auch in anderer Form, z.B. als Perforation, in den überlappend aus einer, zwei oder mehr Folienbahnen durch randseitiges Verkleben, bzw. Verschweißen gebildeten Schutzschlauch, der nachfolgend auch als weiterer Außenfolienschlauch bezeichnet wird, eingebracht werden.

Der Auskleidungsschlauch zeichnet sich dadurch aus, dass der Innenfolienschlauch für UV-Licht durchlässig ist und einen sich in Längsrichtung desselben erstreckenden Verbindungsabschnitt besitzt, welcher zwei parallel zueinander verlaufende Umfangsabschnitte des Innenfolienschlauchs zu einem umfänglich geschlossenen Innenfolienschlauch mit einem definierten Nenndurchmesser DN verbindet, der bevorzugt dem Durchmesser des oberen ersten Schachtabschnitts entspricht. Der Verbindungsabschnitt umfasst erfindungsgemäß eine sich entlang des Innenfolienschlauchs erstreckende Sollbruchstelle, die durch Einbringen eines Druckmediums, insbesondere Druckluft in Umfangsrichtung auftrennbar ist, so dass sich der Innenfolienschlauch und die darauf angeordnete Lage aus Fasermaterial radial über den Nenndurchmesser des ungeöffneten Innenfolienschlauchs hinaus, der im Wesentlichen dem Durchmesser des ersten oberen kleineren Schachtabschnitts entspricht, um mehr als 10 %, bevorzugt mehr als 30 % bis auf den größeren Durchmesser des zweiten unteren Schachtabschnitts aufweiten kann. Hierdurch ergibt sich der Vorteil, dass der umfänglich geschlossene Innenfolienschlauch mit der ungeöffneten Sollbruchstelle bei der Herstellung des Auskleidungsschlauchs auf einer Wickelmaschine als Basisschlauch dienen kann, um den Faserbänder herumgewickelt werden, und der einen wohl definierten Nenndurchmesser DN besitzt und die Wickelzunge oder den Wickeldorn der Wickelmaschine vor einem direkten Kontakt mit dem harzgetränkten Fasermaterial schützt.

Dieser Innenfolienschlauch der eine große Laminatdehnung zulässt, ist damit die erste Schicht, um die die Lage aus Fasermaterial bei der bevorzugten Ausfuhrungsform in bekannter Weise über einem inliegenden Wickeldorn endlos gewickelt wird. So wird der Auskleidungsschlauch herkömmlich gefertigt, verpackt und zur Baustelle geliefert.

Im Unterschied zu einem bekannten gewickelten Auskleidungsschlauch, der zur Sanierung von horizontal verlaufenden Kanälen und Rohrleitungen mit einem im Wesentlichen konstanten Durchmesser eingesetzt wird, zeichnet sich der erfindungsgemäße Auskleidungsschlauch gemäß einer bevorzugten Ausfiihrungsform, dadurch aus, dass die schlauchförmig um den Innenfolienschlauch herum angeordnete Lage aus Fasermaterial aus einem überlappend gewickelten Faserband geformt ist, welches gegenüber Faserbändern, die bei herkömmlichen Auskleidungsschläuchen eingesetzt werden, eine deutlich höhere Längsdehnung erlaubt. Diese erhöhte Längsdehnung, die in Längsrichtung betrachtet wenigstens 10 %, bevorzugt jedoch mehr als 30% oder gar 50% bezogen auf die Länge des ungedehnten Faserbandes betragen kann, ermöglicht es, dass die Glasfaserbänder der gewickelten Faserlage sich in radialer Richtung stärker ausdehnen können, so dass die Lage aus Fasermaterial ihren Durchmesser in radialer Richtung auf den jeweiligen Durchmesser des zweiten Schachtabschnitts erweitern kann, um sich an die Innenwand des erweiterten Schachtabschnitts anzulegen.

Ein solches Glasfaserband mit hoher Längsdehnung herzustellen, ist im Stand der Technik bekannt. Beim Wickeln, bzw. Legen der harzgetränkten Faserbänder des erfindungsgemäßen Auskleidungsschlauchs wird dementsprechend berücksichtigt, dass sich aufgrund der hohen radialen Dehnung die Wanddicke des Laminats entsprechend verringert, so dass die Materialdicke der schraubenförmig übereinander gewickelten Faserbänder um ein entsprechendes Maß erhöht wird, um die Lage aus Fasermaterial mit einem entsprechenden Übermaß herzustellen, welches im fertigen Produkt nach dem Ausdehnen und Aushärten die geforderte Festigkeit gewährleistet.

Die hohe Dehnbarkeit des oder der in der Lage aus Fasermaterial eingesetzten Faserbänder ist zudem auch bei erfindungsgemäßen Auskleidungsschläuchen von Vorteil, bei denen die Lage aus Fasermaterial nicht gewickelt, sondern als Matte überlappend um den Innenfolienschlauch mit der daran geformten Sollbruchstelle herum gelegt wird.

Wie von der Anmelderin weiterhin erkannt wurde, muss sich beim Einsatz eines Außenfolienschlauchs auch dieser entsprechend mehr radial dehnen, als bei einem herkömmlichen Auskleidungsschlauch. Dies kann entweder durch generell dehnfähigere Folien oder eine Soll- Dehnfuge erreicht werden, wie sie beispielsweise in der deutschen Patentanmeldung (DE 10 2011 103 001 A1) beschrieben ist. Alternativ besteht die Möglichkeit, den Außenfolienschlauch, der nach dem Wickeln/Legen der Faserbänder und Aufbringen des Längszugbands aus zwei Flachfolien zu einem Schlauch verschweißt wird, generell etwas weiter, d.h. mit einem größeren Durchmesser zu schweißen, welcher den Durchmesser des ersten Kanalabschnitts mit kleinem Innendurchmesser überschreitet. Dazu kann z.B. die Flachfolie aus denen dieser Schlauch thermisch geschweißt wird, so breit gewählt werden, dass deren Flachbreite in Summe dem Durchmesser des zweiten Schachtabschnitts mit vergrößertem Innendurchmesser entspricht. Damit dieser, mit einem zusätzlichen Übermaß von z.B. 50% geschweißte Außenfolienschlauch beim Transport zur Baustelle und beim Einziehen in einen Kanalschacht gut handhabbar ist, werden die Flachfolien bevorzugt längs gefaltet und mit Klebeband lösbar aneinander fixiert.

Um sicher zu stellen, dass die schlauchförmige Innenfolie des Innenfolienschlauchs, um die das Fasermaterial (Laminat) gewickelt oder gelegt wird, während des gesamten Expansionsvorgangs, bei welchem der Innenfolienschlauch und die darauf angeordnete Lage aus Fasermaterial mittels eingeleiteter Druckluft im Kanalschacht auf den Solldurchmesser gedehnt wird, sowie auch während der anschließenden Aushärtung mit UV Licht luftdicht bleibt, wird im Innenraum des Innenfolienschlauchs erfindungsgemäß ein weiterer Innenfolienschlalauch angeordnet. Dieser kann z.B. bereits bei der Produktion des Auskleidungsschlauchs von vorn herein mit in den Innenfolienschlauch eingezogen werden, wenn dieser auf einem Wickeldorn, wie in der o.g. WO-A 95/04646 beschrieben gefertigt wird. Bevorzugt wird der weitere Innenfolienschlauch erst auf der Baustelle in den Auskleidungsschlauch eingeführt, was bei Auskleidungsschläuchen zur Auskleidung von Kanalschächten aufgrund der vergleichsweise geringen Längen von lediglich bis zu 6 m mit geringem Aufwand möglich ist.

Auf der Baustelle wird der erfindungsgemäße Auskleidungsschlauch mit dem die Sollbruchstelle aufweisenden Innenfolienschlauch in seiner aktuell benötigten Länge konfektioniert und im Anschluss daran der weitere Innenfolienschlauch, der bevorzugt aus der gleichen Folie wie der Innenfolienschlauch besteht, in den Auskleidungsschlauch eingeführt.

Der weitere Innenfolienschlauch, dessen Durchmesser mindestens dem vergrößerten Durchmesser des zweiten Schachtabschnitts entspricht, wird hierzu an seinem einen Ende mit einem Knoten oder Kabelbinder verschlossen, so dass ein Foliensack entsteht, der bevorzugt ca. 10 - 20% länger als das konfektionierte Stück des Auskleidungsschlauchs ist, welches in den Kanalschacht eingesetzt werden soll.

Der auf die gewünschte Schachttiefe konfektionierte Auskleidungsschlauch wird dann an seinem einen Ende mit einem bekannten Packer verschlossen und mittels eines Krans in das Schachtbauwerk abgelassen, bis das zweite offene Ende auf der sogenannten Berme, d.h. dem Übergang zwischen zylindrischem Teil des Kanalschachts und dem sogenannten Gerinne, aufsteht. Danach wird der zweite Innenfolienschlauch durch den Packer hindurch von oben her in den Auskleidungsschlauch eingeführt, und eine UV-Lichtquelle von oben her eingehängt.

Im Anschluss daran wird der Auskleidungsschlauch mit dem eingesetzten weiteren Innenfolienschlauch (Luftsack), welcher einen wesentlich größeren Durchmesser besitzt, als der erste Schachtabschnitt, bzw. der nicht aufgetrennte Innenfolienschlauch, mittels des Packers verschlossen, und der Innenraum des Luftsacks über eine externe Druckluftquelle mit Druckluft beaufschlagt. Hierdurch wird der weitere Innenfolienschlauch expandiert, und legt sich zunächst an den die Sollbruchstelle aufweisenden geklebten Innenfolienschlauch an, dessen Durchmesser im Wesentlichen dem Durchmesser des ersten kleineren Schachtabschnitts entspricht.

Wird der Druck weiter erhöht reißt die Verklebung/Schweißnaht (Sollbruchstelle) des Innenfolienschlauchs auf, so dass dieser fortan keinen Widerstand mehr gegen eine weitere Aufdehnung darstellt. Dies ermöglicht es, dass sich die Lage aus Fasermaterial, die einen Durchmesser besitzt, welcher im Wesentlichen dem Durchmesser des ersten oberen (kleineren) Schachtabschnitts entspricht, sich radial weiter aufdehnen kann.

Da der Durchmesser des weiteren Innenfolienschlauchs gleich oder bevorzugt etwas größer als der Durchmesser des zylindrischen unteren Abschnitts des Kanalschachts ist, erfährt der weitere Innenfolienschlauch weder im oberen ersten Schachtabschnitt, als auch im unteren zweiten Schachtabschnitt eine Dehnung, so dass sich dieser weitere Innenfolienschlauch (Luftsack) im ersten Schachabschnitt spannungsfrei an die Innenwand des entlang der Sollbruchstelle geschlossenen Innenfolienschlauchs und im zweiten vergrößerten Schachtabschnitt - sowie auch in dem die beiden Schachtabschnitte verbindenden konischen Übergangsabschnitt - nach dem Aufplatzen der Sollbruchstelle des Innenfolienschlauchs an die Innenwand der Lage aus Fasermaterial anlegen kann. Hierdurch wird in vorteilhafter Weise sichergestellt, dass der weitere Innenfolienschlauch insgesamt luftdicht bleibt und trotz der geöffneten Solbruchstelle im Innenfolienschlauch keine Druckluft durch die Lage aus harzgetränktem Fasermaterial hindurch austreten kann, welche zu einem Ausblasen von Reaktionsharz führen würde.

Wie die Anmelderin erkannt hat, ist der weitere Innenfolienschlauch bei der Sanierung von Kanalschächten zwingend erforderlich, da im Gegensatz zu herkömmlichen Auskleidungsschläuchen für die Sanierung von horizontal verlaufenden Kanälen und Rohrleitungen im unteren Schachtabschnitt kein zweiter Packer zum Verschließen des Auskleidungsschlauchs eingesetzt werden kann. Dies begründet sich damit, dass der Schacht wenigstens bis zum unteren Ende des zylindrischen Teils hinab und möglichst sogar darüber hinaus bis in die Berme ausgekleidet werden soll.

Die Erfindung wird nachfolgend mit Bezug auf die Zeichnungen anhand von bevorzugten Ausführungsformen beschrieben.

In den Zeichnungen zeigen:
- Fig. 1: eine schematische teiltransparente Aufsicht auf einen erfindungsgemäßen Auskleidungsschlauch,
- Fig. 2a: eine schematische Darstellung eines zu sanierenden Kanalschachts vor dem Einführen eines erfindungsgemäßen Auskleidungsschlauchs.
- Fig. 2b: den Kanalschacht von Fig. 2a nach dem Absenken des Auskleidungsschlauchs,
- Fig. 2c: den Kanalschacht von Fig. 2a vor dem Einführen des weiteren Innenfolienschlauchs in den Auskleidungsschlauch,
- Fig. 2d: den Kanalschacht von Fig. 2a nach dem Einführen des weiteren Innenfolienschlauchs,
- Fig. 2e: den Kanalschacht von Fig. 2a nach dem Einführen einer Strahlungsquelle und Expandieren des Auskleidungsschlauchs sowie Bestrahlen der Innenseite der an die Innenwand der unterschiedlich weiten Schachtabschnitte angelegten Lage aus Fasermaterial,
- Fig. 3: eine schematische Teildarstellung einer bevorzugten Ausführungsform eines in den erfindungsgemäßen Auskleidungsschläuchen eingesetzten Innenfolienschlauch mit Sollbruchstelle, und
- Fig. 4: eine schematische Teildarstellung einer weiteren Ausfuhrungsform eines in den erfindungsgemäßen Auskleidungsschläuchen eingesetzten nahtlosen Innenfolienschlauch mit einer Sollbruchstelle, die eine Folienschlaufe enthält, welche durch einen Folienstreifen überbrückt ist.

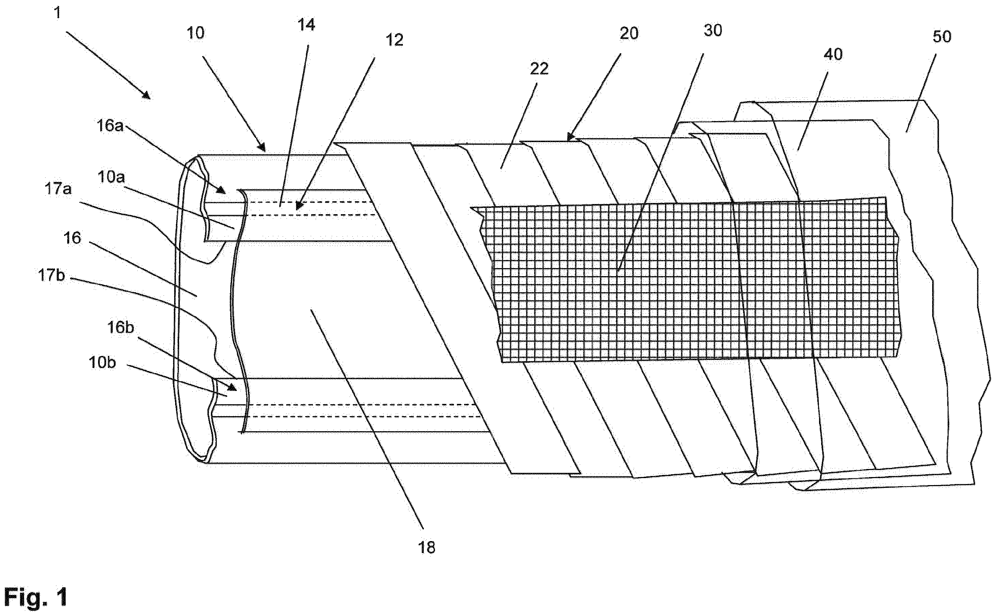

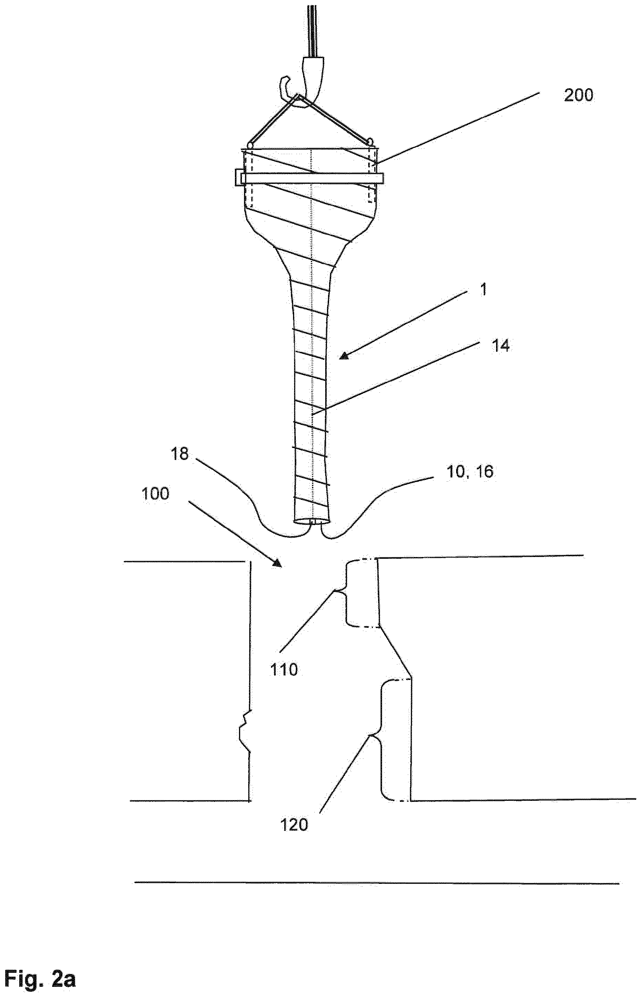

Wie in der Darstellung von Fig. 1 gezeigt ist, umfasst ein Auskleidungsschlauch 1 zur Sanierung eines in Fig. 2a dargestellte defekten Kanalschachts 100, der einen ersten Schachtabschnitt 110 mit einem ersten Durchmesser und einen sich daran anschließenden zweiten Schachtabschnitt 120 mit einem erweiterten Durchmesser aufweist, einen Innenfolienschlauch 10 sowie eine um diesen herum angeordnete, radial aufweitbare Lage aus Fasermaterial 20, welches mit einem härtbaren Reaktionsharz getränkt ist.

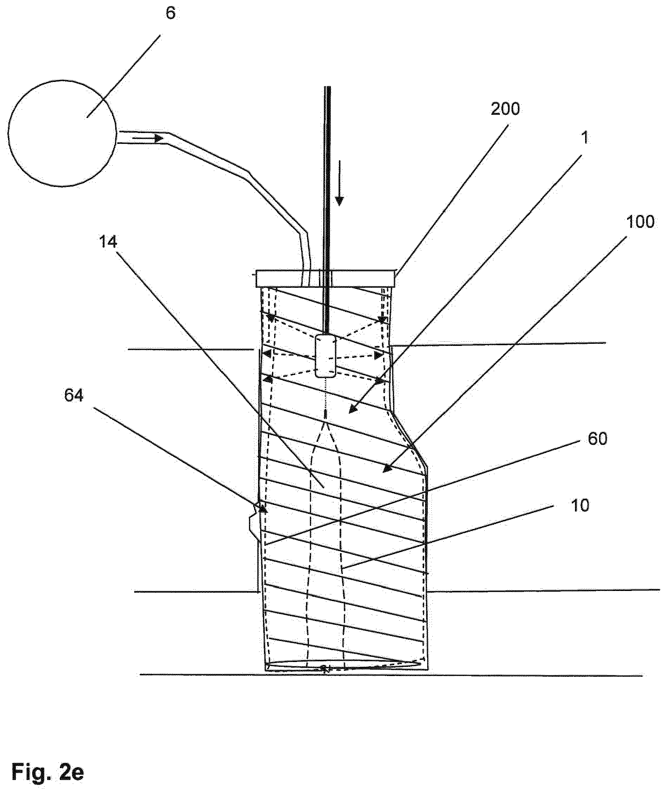

Der Auskleidungsschlauch zeichnet sich dadurch aus, dass der Innenfolienschlauch 10 einen sich in Längsrichtung desselben erstreckenden Verbindungsabschnitt 12 besitzt, welcher zwei parallel zueinander verlaufende Umfangsabschnitte 10a, 10b des Innenfolienschlauchs 10 zu einem umfänglich geschlossenen Innenfolienschlauch mit einem definierten Nenndurchmesser DN verbindet. Der Verbindungsabschnitt 12 umfasst eine sich entlang des Innenfolienschlauchs 10 erstreckende Sollbruchstelle 14, die durch Einbringen eines Druckmediums, insbesondere Druckluft, aus einer Druckgasquelle 6 (Fig. 2e) in den Innenfolienschlauch 10 in Umfangsrichtung auftrennbar ist, so dass sich der Innenfolienschlauch 10 und die darauf angeordnete Lage aus Fasermaterial 20 radial über den Nenndurchmesser hinaus, der im Wesentlichen dem Durchmesser des ersten oberen kleineren Schachtabschnitts 110 (Fig. 2a) entspricht, um mehr als 10 %, bevorzugt mehr als 30 % und besonders bevorzugt bis zu 50 % bis auf den erweiterten Durchmesser des zweiten unteren Schachtabschnitts 120 aufweiten lässt. So kann in der Praxis bei einem üblichen Kanalschacht 100 mit einer Schachttiefe von 2 bis 5 m der kleinere Durchmesser des oberen Schachtabschnitts 110 beispielsweise 600 mm, und der Durchmesser des unteren zylindrischen zweiten Schachtabschnitts 120 z.B. 1000 mm betragen, wobei zwischen dem ersten und zweiten Schachtabschnitt 110, 120 ein konischer Übergangsabschnitt geformt ist.

Bei der bevorzugten Ausführungsform der Erfindung wird zur Bildung des Innenfolienschlauchs 10 wenigstens eine, z.B. durch Legen zu einem Schlauch geformte transparente Flachfolie 16 verwendet, deren Längsränder 17a, 17b, wie in Fig. 1 gezeigt, im Abstand zueinander verlaufen und durch einen auf die Außenseite aufgeklebten oder thermisch aufgeschweißten transparenten Folienstreifen 18 miteinander verbunden sind. Die Sollbruchstelle 14 erstreckt sich bei dieser sehr kostengünstig zu fertigenden, in Fig. 1 gezeigten Ausführungsform entlang einem, bzw. beiden Längs-Schweißnähten, bzw. Klebestellen, entlang denen der transparente Folienstreifen 18 mit den entsprechenden Umfangsabschnitten 10, 10b der ebenfalls transparenten Flachfolie 16 verbunden ist aus welcher der Innenfolienschlauch 10 geformt wird.

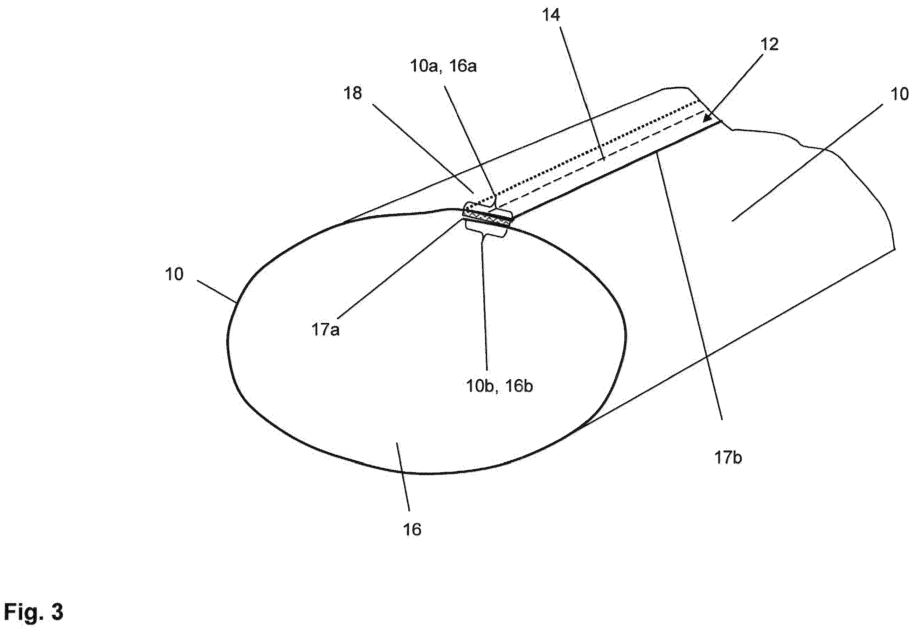

Bei einer weiteren, in Fig. 3 gezeigten Ausfuhrungsform der Erfindung, die besonders kostengünstig und einfach zu fertigen ist, umfasst der Innenfolienschlauch 10 wenigstens eine zu einem Schlauch geformte Flachfolie 16, deren Randabschnitte 16a, 16b überlappend übereinander geführt und z.B. durch einen in Fig. 3 lediglich schematisch angedeuteten Klebstoff, z.B. ein doppelseitiges Klebeband, oder durch thermisches Verschweißen, miteinander verbunden sind. Alternativ können die Randabschnitte 16a und 16b auch durch ein transparentes Klebeband miteinander verbunden werden. Die zuvor beschriebenen beiden Ausführungsformen des erfindungsgemäßen Innenfolienschlauchs bieten den Vorteil, dass in diesen hinein ein weiterer umfänglich geschlossener, bevorzugt nahtloser Innenfolienschlauch eingelegt werden kann, der z.B. als kostengünstige endlose Rollenware bereit gestellt wird, bevor die beiden Umfangsabschnitte 10a, 10b miteinander verklebt, bzw. verschweißt werden. Bei dieser Ausfuhrungsform werden die harzgetränkten Faserbänder der Lage aus Fasermaterial, in besonders vorteilhafter Weise um den verklebten/verschweißten Innenfolienschlauch überlappend herum gelegt. Die Faserbänder sind in diesem Falle als einzelne Matten ausgebildet, die eine Länge besitzen, welche der Länge des zu fertigenden Auskleidungsschlauchs entspricht. Die Breite der Matten ist bei dieser Ausführungsfonn geringfügig, z.B. 10 %, größer als der Innenumfang des zweiten vergrößerten Schachtabschnitts 120, wodurch sicher gestellt wird, dass die Lage aus Fasermaterial sich durch umfängliches Verschieben der überlappend geführten Längsränder der Matte auf den zweiten größeren Durchmesser aufweiten kann, dabei jedoch umfänglich vollständig stets geschlossen bleibt, wenn sich die Lage aus Fasermaterial an den zweiten Schachtabschnitt mit größerem Durchmesser angelegt hat.

Um bei den zuvor beschriebenen Ausführungsformen des durch überlappendes Verkleben/Verschweißen einer Flachfolie 16 gefertigten Innenfolienschlauchs 10 einen Austritt von Druckluft durch die mitunter nicht vollständig geschlossenen Nahtstellen, bzw. durch die geöffnete Sollbruchstelle 14 im Bereich des zweiten Schachtabschnitts 120 mit vergrößertem Durchmesser zu verhindern, wird innerhalb des verschweißten/verklebten Innenfolienschlauchs 10 ein weiterer Innenfolienschlauch 60 aus einem luftdichten transparenten Kunststoffmaterial angeordnet, dessen eines Ende durch Verschweißen oder durch ein Dichtelement 62, insbesondere eine um die Außenseite des weiteren Innenfolienschlauchs 60 herum gewickelte Schnur, oder einen Kabelbinder, zur Bildung eines einseitig geschlossenen Luftsacks 64 luftdicht verschließbar ist. Obgleich der weitere Innenfolienschlauch 60 bereits während der Fertigung werkseitig in den Innenfolienschlauch 10 eingelegt werden kann, wird dieser bevorzugt erst auf der Baustelle, insbesondere nach dem Einführen des Auskleidungsschlauchs 1 in den vertikalen Kanalschacht 100, in den Innenraum des Innenfolienschlauchs 10 eingeschoben, wobei das untere freie Ende des weiteren Innenfolienschlauchs 60 zur Bildung des einseitig geschlossenen Luftsacks 64 zuvor durch Verschweißen oder durch ein Dichtelement 62 luftdicht verschlossen wird.

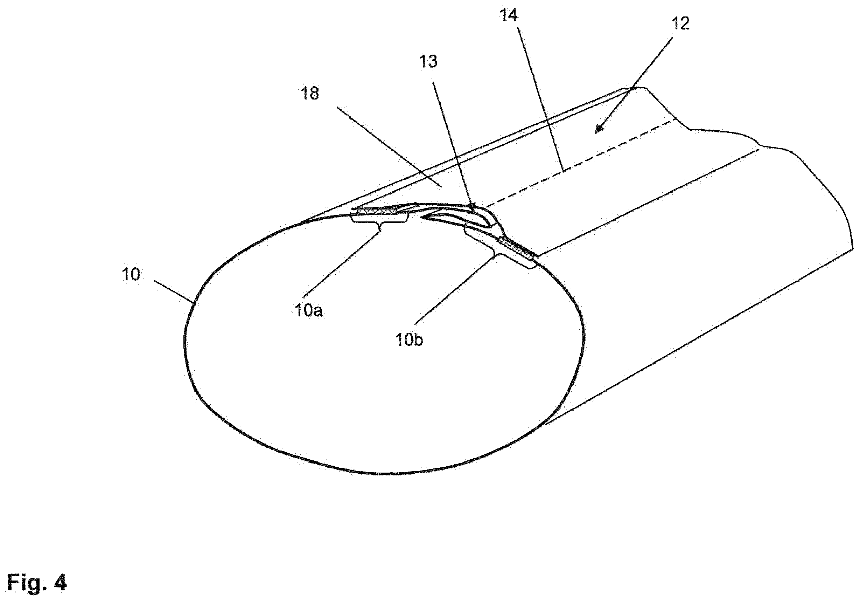

Nach einer weiteren alternativen Ausführungsform der Erfindung kann der Innenfolienschlauch 10 ein in Umfangsrichtung nahtloser Folienschlauch sein, der einen kreisförmigen Querschnitt mit einem Durchmesser besitzt, der mehr als 10%, bevorzugt mehr als 40% des Nenndurchmessers des ersten Schachtabschnitts 110 beträgt, und der bevorzugt dem Durchmesser des zweiten vergrößerten Schachtabschnitts 120 eines zu sanierenden Kanalschachts 110 entspricht. Die beiden benachbart zueinander angeordneten außenliegende Umfangsabschnitte 10a, 10b des nahtlosen Folienschlauchs 10 sind bei dieser, in Fig. 4 gezeigten Ausfiihrungsform der Erfindung im Bereich des Verbindungsabschnitts 12 unter Bildung einer in Umfangsrichtung des Innenfolienschlauchs 10 verlaufenden, sich über die Länge des Innenfolienschlauchs 10 hinweg erstreckenden Folienschlaufe 13 durch einen aufgeklebten oder thermisch aufgeschweißten transparenten Folienstreifen 18 verbunden, der die Folienschlaufe 13 überspannt und abdeckt. Hierdurch wird in vorteilhafter Weise ein Verbindungsabschnitt mit einer Sollbruchstelle 14 bereitgestellt, die in Fig. 4 entlang des ersten und zweiten Umfangsabschnitts 10a, 10b exemplarisch im Bereich der Klebestelle oder Schweißnaht verläuft, und der schematisch durch die gestrichelten Linien in Fig. 4 angedeutet ist. Beim Einsetzen und Expandieren des Innenfolienschlauchs 10 der Ausführungsform von Fig. 4 spielt es dabei keine Rolle, ob die in der Darstellung rechte oder linke Schweißnaht/Klebestelle beim Expandieren des Auskleidungsschlauchs 1 im erweiterten zweiten Schachtabschnitt 120 aufreißt, da durch den in Umfangsrichtung vollständig geschlossenen Innenfolienschlauch 10 stets für ein abgeschlossenes Luftvolumen im Inneren des Auskleidungsschlauchs 1 gesorgt wird, welches ein Ausblasen des Reaktionsharzes beim Expandieren desselben zuverlässig verhindert.

Um bei einer Lage aus Fasermaterial 20, die durch überlappendes schraubenförmiges Wickeln erhalten wird, eine ausreichend hohe umfängliche Dehnbarkeit der Lage zu gewährleisten, besitzt diese wenigstens ein schraubenförmig überlappend gewickeltes Faserband, insbesondere Glasfaserband 22, dessen Fasermaterial eine Dehnbarkeit in Längsrichtung von mehr als 10 % bezogen auf die Gesamtlänge des Bandes aufweist. Wie von der Anmelderin gefunden wurde, erlaubt diese große Längsdehnung eine entsprechend große radiale Aufdehnung der aus dem schraubenförmig überlappend gewickelten Faserband hergestellten Lage 20 um mehr als 10 %, insbesondere mehr als 30 %, bis hin zu 60 %, ohne dass ein signifikanter Schrumpf in Längsrichtung des Auskleidungsschlauchs 1 auftritt.

Wie der Darstellung der Fig. 1 weiterhin entnommen werden kann, ist bei den zuvor beschriebenen Ausführungsformen von Auskleidungsschläuchen 1 auf der Lage aus Fasermaterial 20 bevorzugt wenigstens ein Längszugband 30 angeordnet, welches sich in Längsrichtung des Auskleidungsschlauchs 1 erstreckt. Das Längszugband 30 umfasst bevorzugt durchgängige Glasfasern oder Glasfaser-Rovinge, die bevorzugt über die gesamte Länge des Auskleidungsschlauchs hinweg verlaufen und die die Axialkräfte aufnehmen, wenn der Auskleidungsschlauch 1 beispielsweise mittels eines Krans in einen zu sanierenden defekten Kanalschacht 100 eingesetzt wird.

Weiterhin wird bei der bevorzugten Ausführungsform des Auskleidungsschlauchs 1 um die Lage aus Fasermaterial 20 herum ein Außenfolienschlauch 40 angeordnet, welcher bevorzugt einen Durchmesser besitzt, der größer oder gleich dem Durchmesser des weiteren Innenfolienschlauchs/Luftsacks 64 ist, und der bevorzugt eine Barriere gegen den Austritt von schädlichen Substanzen, insbesondere Styrol, aus dem Reaktionsharz in das umliegende Erdreich verhindert. Der Außenfolienschlauch 40 kann zudem von einem weiteren Außenfolienschlauch 50 umgeben sein, der aus einem verstärkten zugfesten und für UV-Licht undurchlässigen Werkstoff besteht, insbesondere aus einer gewebeverstärkten Kunststofffolie, die mit einem umfänglich dehnbaren Abschnitt versehen ist, welcher beim Expandieren des Auskleidungsschlauchs ab einem vorgegebenen Überdruck, beispielsweise 0,2 bar, im zweiten Schachtabschnitt 120 ähnlich der Sollbruchstelle 14 aufplatzt und eine radiale Dehnung der Lage aus Fasermaterial 20 erlaubt.

Nach einem weiteren der Erfindung zugrunde liegenden Gedanken zeichnet sich ein Verfahren zur Herstellung eines zuvor beschriebenen Auskleidungsschlauchs 1 durch die folgenden Verfahrensschritte aus:
Zunächst wird eine für UV-Licht durchlässige Kunststoff-Flachfolie 16 zu einem umfänglich geschlossenen Innenfolienschlauch 10 mit einem vorgegebenen Nenndurchmesser geformt. Dies erfolgt in vorteilhafter Weise durch überlappendes Verkleben oder Verschweißen der Längsränder 17a, 17b der transparenten Kunststoff-Flachfolie 16 und/oder durch Aufkleben oder thermisches Aufschweißen eines transparenten Folienstreifens 18 auf zwei benachbarte außenliegende parallel zueinander verlaufenden Umfangsabschnitte 10a, 10b der schlauchförmig angeordneten Kunststoff-Flachfolie 16. Hierdurch wird ein Verbindungsabschnitt 12 erzeugt, welcher eine in Längsrichtung des Innenfolienschlauchs 10 verlaufende Sollbruchstelle 14 aufweist. Auf der Außenseite des so gebildeten Innenfolienschlauchs 10 mit Sollbruchstelle 14 wird wenigstens eine umfänglich geschlossene Lage 20 aus Fasermaterial durch überlappendes Legen oder überlappendes schraubenförmiges Wickeln von wenigsten einem harzgetränkten Faserband 22, insbesondere Glasfaserband angeordnet. Das Wickeln erfolgt hierbei bevorzugt auf einer Wickelvorrichtung, wie sie beispielsweise in der WO-A 95/04646 beschrieben ist.

Bei einer besonders vorteilhaften Ausführungsform des Verfahrens wird in die Kunststoff-Flachfolie 16 ein sich über die Länge des Auskleidungsschlauchs 1 hinweg erstreckender weiterer transparenter umfänglich luftdicht geschlossener Innenfolienschlauch 60 eingelegt, bevor die Kunststoff-Flachfolie 16 zu dem umfänglich geschlossenen Innenfolienschlauch 10 geformt wird.

Der in der zuvor beschriebenen Weise gefertigte erfindungsgemäße Auskleidungsschlauch 1 wird anschließend zur Baustelle transportiert und dort in einem zu sanierenden defekten Kanalschacht 100 installiert, wie dies in den Darstellungen der Figuren 2a bis 2e gezeigt ist.

Hierbei wird zunächst ein Ende des Auskleidungsschlauchs 1, beispielsweise mit einem nicht näher bezeichneten Spanngurt, an einem bekannten topfförmigen Packer 200 befestigt, der durch einen nicht näher gezeigten Kran oberhalb des Kanalschachts 100 gehalten wird. Der Packer 200 mit dem daran befestigten Auskleidungsschlauch 1 wird anschließend, wie in Fig. 2a gezeigt, in einer vertikalen Position oberhalb des Kanalschachts 100 positioniert, der einen ersten oberen Schachtabschnitt 110 mit einen kleineren Durchmesser, beispielsweise 600 mm, und einen darunterliegenden zweiten Kanalabschnitt 120 mit einem größeren Durchmesser, beispielsweise 1000 mm, besitzt.

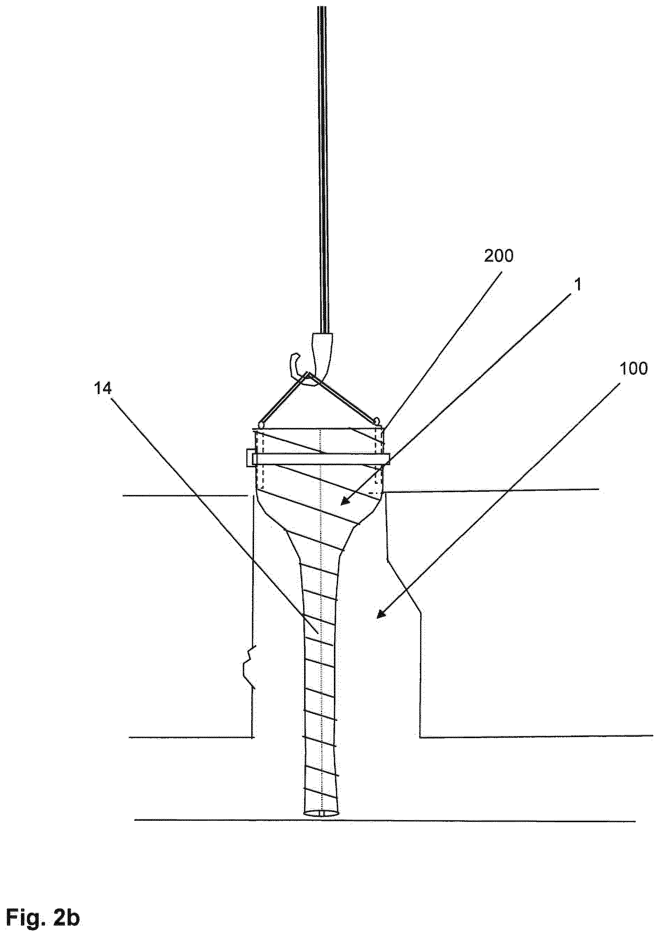

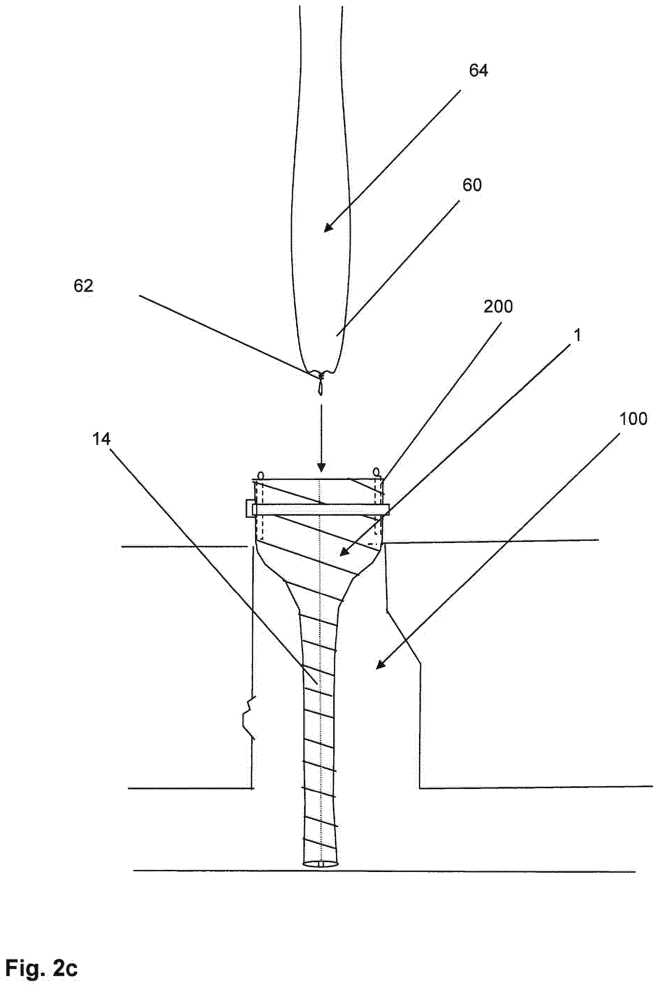

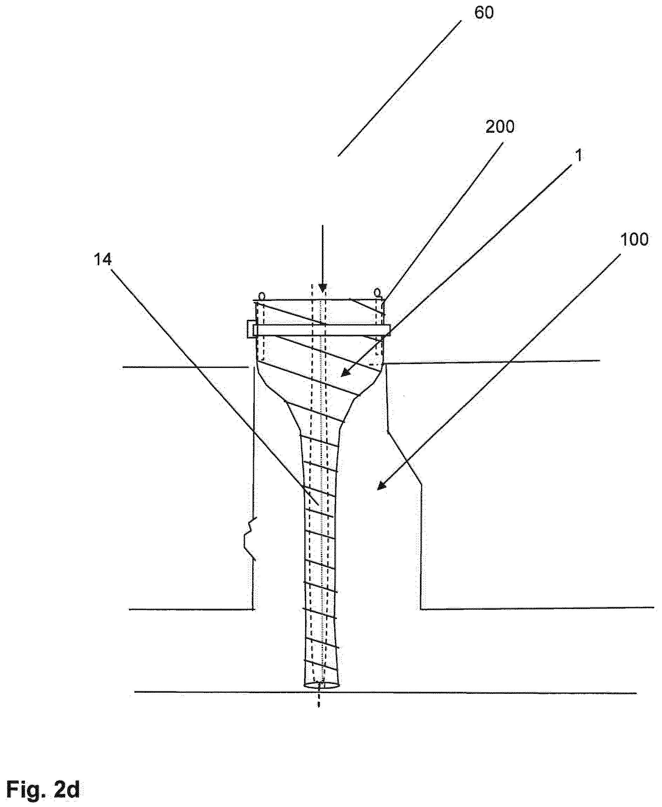

Als nächstes wird der Packer 200 mit dem daran befestigten Auskleidungsschlauch 1 in den Kanalschacht 100 abgesenkt bis das untere Ende des Auskleidungsschlauchs 1 auf dem Boden des Kanalschachts 100 aufliegt (Fig. 2 b).

Im Anschluss daran wird ein zuvor beschriebener weiterer Innenfolienschlauch 60, der zuvor bodenseitig beispielsweise durch ein Dichtelement 62 oder durch Verknoten verschlossen wurde und einen einseitig geschlossenen Luftsack 64 bildet, von oben her in den Innenfolienschlauch 10 des Auskleidungsschlauchs 1 eingeführt, wie dies in den Figuren 2c und 2d gezeigt ist.

In einem letzten Verfahrensschritt wird der Packer 200 auf seiner Oberseite in bekannter Weise durch einen nicht näher bezeichneten Deckel verschlossen und der Innenraum des Luftsacks 64 in bekannter Weise durch Einleiten von Druckluft aus einer Druckluftquelle 6 durch den Deckel des Packers 200 hindurch mit Überdruck beaufschlagt. Hierdurch legt sich der Innenfolienschlauch 10 im Bereich des ersten Kanalabschnitts 110 an die Innenseite der Lage aus Fasermaterial 20 an und drängt diese gegen die Innenseite des ersten Schachtabschnitts 110, wobei der Innenfolienschlauch 10 entlang der Sollbruchstelle 14 geschlossen ist. In dem sich anschließenden konischen Übergangsabschnitt sowie dem zweiten Schachtabschnitt 120, in dem der Kanalschacht 100 einen größeren Durchmesser als der Nenndurchmesser des Innenfolienschlauchs 10 aufweist, reißt die Sollbruchstelle 14 aufgrund des zunehmenden Drucks auf und erlaubt es, dass sich der weitere Innenfolienschlauch/Luftsacks 64 an die Innenseite der teilweise freigelegten Lage 20 aus Fasermaterial 20 anlegt und dieses radial aufweitet und gegen die Innenwand des zweiten Schachtabschnitts 20 drückt.

Schließlich wird das Reaktionsharz in der Lage aus Fasermaterial 20 durch Einführen einer nicht näher bezeichneten UV-Strahlungsquelle in den Innenraum des Luftsacks 64 ausgehärtet, während das Fasermaterial durch den Überdruck im weiteren Innenfolienschlauch 60/Luftsack 64 mit hohem Druck an die Innenwand des Kanalschacht 100 angedrückt wird.

### Bezugszeichenliste

- 1: Auskleidungsschlauch
- 6: Druckgasquelle
- 10: Innenfolienschlauch
- 10a: erster Umfangsabschnitt des Innenfolienschlauchs
- 10b: zweiter Umfangsabschnitt des Innenfolienschlauchs
- 12: Verbindungsabschnitt
- 13: Folienschlaufe
- 14: Sollbruchstelle
- 16: zu Schlauch geformte Flachfolie
- 16a: Randabschnitt
- 16b: Randabschnitt
- 17a: Längsrand
- 17b: Längsrand
- 18: aufgeschweißter Folienstreifen
- 20: Lage aus Fasermaterial
- 22: Faserband
- 30: Längszugband
- 40: Außenfolienschlauch
- 50: weiterer Außenfolienschlauch aus verstärktem zugfestem Werkstoff
- 60: weiterer Innenfolienschlauch
- 62: Dichtelement/ Schnur
- 64: Luftsack
- 100: Kanalschacht
- 110: erster Schachtabschnitt
- 120: zweiter Schachtabschnitt
- 200: Packer

## Patentansprüche

1. Auskleidungsschlauch (1) zur Sanierung eines defekten Kanalschachts (100), der einen ersten Schachtabschnitt (110) mit einem ersten Durchmesser und einen sich daran anschließenden zweiten Schachtabschnitt (120) mit einem erweiterten Durchmesser aufweist, umfassend einen für UV-Licht durchlässigen Innenfolienschlauch (10) sowie eine um diesen herum angeordnete, radial aufweitbare Lage aus Fasermaterial (20), welches mit einem durch UV-Licht härtbaren Reaktionsharz getränkt ist, wobei der Innenfolienschlauch (10) einen sich in Längsrichtung desselben erstreckenden Verbindungsabschnitt (12) aufweist, welcher zwei parallel zueinander verlaufende Umfangsabschnitte (10a), (10b) des Innenfolienschlauchs (10) zu einem umfänglich geschlossenen Innenfolienschlauch (10) mit einem definierten Nenndurchmesser verbindet, und wobei der Verbindungsabschnitt (12) eine sich entlang des Innenfolienschlauchs (10) erstreckende Sollbruchstelle (14) besitzt, die durch Einbringen eines Druckmediums in den Innenfolienschlauch in Umfangsrichtung auftrennbar ist, um den Innenfolienschlauch (10) und die darauf angeordnete Lage aus Fasermaterial (20) radial über den Nenndurchmesser hinaus aufzuweiten.

2. Auskleidungsschlauch nach Anspruch 1,
**dadurch gekennzeichnet,**
**dass** der Innenfolienschlauch (10) wenigstens eine zu einem Schlauch geformte Flachfolie (16) umfasst, deren Längsränder (17a), (17b) im Abstand zueinander verlaufen und durch einen auf die Außenseite oder Innenseite aufgeklebten oder thermisch aufgeschweißten transparenten Folienstreifen (18) verbunden sind.

3. Auskleidungsschlauch nach Anspruch 1,
**dadurch gekennzeichnet,**
**dass** der Innenfolienschlauch wenigstens eine zu einem Schlauch geformte Flachfolie (16) umfasst, deren Randabschnitte (16a), (16b) mit einem transparenten Klebeband verbunden sind oder überlappend übereinander geführt und durch Klebstoff, ein transparentes doppelseitiges Klebeband oder thermisches Verschweißen miteinander verbunden sind.

4. Auskleidungsschlauch nach Anspruch 1,
**dadurch gekennzeichnet,**
**dass** der Innenfolienschlauch (10) ein in Umfangsrichtung nahtloser Folienschlauch ist, der einen kreisförmigen Querschnitt mit einem Durchmesser besitzt, der mehr als 10%, bevorzugt mehr als 40% des Nenndurchmessers beträgt, und dass zwei parallel zueinander angeordnete außenliegende Umfangsabschnitte (10a), (10b) des nahtlosen Folienschlauchs (10) im Bereich des Verbindungsabschnitts (12) unter Bildung einer in Umfangsrichtung des Innenfolienschlauchs (10) verlaufenden, sich über die Länge des Innenfolienschlauchs (10) hinweg erstreckende Folienschlaufe (13) durch einen aufgeklebten oder thermisch aufgeschweißten transparenten Folienstreifen (18), der die Folienschlaufe (13) überspannt, miteinander verbunden sind.

5. Auskleidungsschlauch nach einem der vorhergehenden Ansprüche,
**dadurch gekennzeichnet,**
**dass** die Lage aus Fasermaterial (20) wenigstens ein schraubenförmig überlappend gewickeltes Faserband (22) oder wenigstens ein sich in Längsrichtung des Auskleidungsschlauchs (1) erstreckendes, an seinen Längsrändern überlappend gelegtes Faserband (22) umfasst, dessen Fasermaterial eine Dehnbarkeit von mehr als 10 % besitzt, derart, dass die schlauchförmige Lage (20) aus Fasermaterial durch Einleiten eines Druckmediums in den Innenraum des Auskleidungsschlauchs (1) radial von einem ersten Durchmesser auf einen zweiten Durchmesser vergrößerbar ist, dessen Größe die Größe des ersten Durchmessers um wenigstens 10 %, insbesondere mehr als 30 %, übersteigt.

6. Auskleidungsschlauch nach einem der vorhergehenden Ansprüche,
**dadurch gekennzeichnet,**
**dass** auf der Lage aus Fasermaterial (20) ein sich in Längsrichtung des Auskleidungsschlauchs (1) erstreckendes Längszugband (30) angeordnet ist, welches in Längsrichtung des Auskleidungsschlauchs (1) verlaufende Glasfasern und/oder Glasfaserrovinge zur Aufnahme und Übertragung von Axialkräften beim Einziehen des Auskleidungsschlauchs (1) in einen Kanalschacht (100) enthält, und/oder dass um die Lage aus Fasermaterial (20) ein Außenfolienschlauch (40) und optional ein insbesondere für UV-Licht undurchlässiger weiterer Außenfolienschlauch (50) aus einem verstärkten zugfesten Werkstoff, insbesondere einer gewebeverstärkten Kunststofffolie, zur Aufnahme von axialen Zugkräften angeordnet ist.

7. Auskleidungsschlauch nach einem der vorhergehenden Ansprüche,
**dadurch gekennzeichnet,**
**dass** innerhalb des Innenfolienschlauchs (10) ein sich in Längsrichtung des Auskleidungsschlauchs (1) über dessen gesamte Länge hinweg erstreckender weiterer Innenfolienschlauch (60) aus einem luftdichten transparenten Kunststoffmaterial angeordnet ist, dessen eines Ende durch ein Dichtelement (62), insbesondere einen Knoten oder eine um die Außenseite des weiteren Innenfolienschlauchs herum gewickelte Schnur oder einen Kabelbinder, zur Bildung eines einseitig geschlossenen Luftsacks (64), luftdicht verschließbar ist.

8. Verfahren zu Herstellung eines Auskleidungsschlauch nach einem der vorhergehenden Ansprüche,
**gekennzeichnet durch** die folgenden Verfahrensschritte:
Formen einer transparenten, für UV-Licht durchlässigen Kunststoff-Flachfolie (16) zu einem umfänglich geschlossenen Innenfolienschlauch (10) mit einem vorgegebenen Nenndurchmesser **durch** überlappendes Verkleben oder Verschweißen der Längsränder (17a, 17b) der transparenten Kunststoff-Flachfolie (16) und/oder **durch** Aufkleben oder thermisches Aufschweißen eines transparenten Folienstreifens (18) auf zwei benachbarte außenliegende parallel zueinander verlaufenden Umfangsabschnitte (10a), (10b) der schlauchförmig angeordneten Kunststoff-Flachfolie (16) unter Erzeugung eines Verbindungsabschnitts (12), welcher eine in Längsrichtung des Innenfolienschlauchs (10) verlaufende Sollbruchstelle (14) aufweist, und
Anordnen einer Lage aus Fasermaterial (20) auf der Außenseite des umfänglich geschlossenen schlauchförmigen Innenfolienschlauchs (10) **durch** überlappendes schraubenförmiges Wickeln oder überlappendes Legen von wenigsten einem Faserband (22), insbesondere Glasfaserband, um den Innenfolienschlauch (10) herum, welches mit einem **durch** UV-Licht härtbaren Reaktionsharz getränkt ist.

9. Verfahren nach Anspruch 8,
**dadurch gekennzeichnet,**
**dass** in die Kunststoff-Flachfolie (16) ein sich über die Länge des Auskleidungsschlauchs (1) hinweg erstreckender weiterer transparenter umfänglich luftdicht geschlossener Innenfolienschlauch (60) eingelegt wird, bevor die Kunststoff-Flachfolie (16) zu dem umfänglich geschlossenen Innenfolienschlauch (10) geformt wird.

10. Verfahren zum Auskleiden eines defekten Kanalschachts (100), der einen ersten Schachtabschnitt (110) mit einem ersten Durchmesser und einen sich daran anschließenden zweiten Schachtabschnitt (120) mit einem erweiterten Durchmesser aufweist,
**gekennzeichnet durch** die folgenden Verfahrensschritte:
Befestigen des einen Endes eines Auskleidungsschlauchs (1) nach einem der Ansprüche 1 bis 7 an einem topfförmigen Packer (200),
Anheben des Packers (200) mit dem daran befestigten Auskleidungsschlauch (1) in eine vertikale Position oberhalb des Kanalschachts (100),
Absenken des Packers (200) mit dem daran befestigten Auskleidungsschlauch (1) in den Kanalschacht (100),
Expandieren eines im Bereich des Bodens des Kanalschachts (100) luftdicht verschlossenen Luftsacks (64) im Inneren des Auskleidungsschlauchs (1) **durch** Einleiten eines Druckmediums, insbesondere Druckluft, in den Luftsack (64), derart, dass sich der Auskleidungsschlauch (1) im Inneren des Kanalschachts (100) unter Auftrennung der Sollbruchstelle (14) im Verbindungsabschnitt (12) radial aufweitet und an die Innenwand des erweiterten zweiten Kanalabschnitts (120) anlegt, und Aushärten des Reaktionsharzes in der Lage (20) aus Fasermaterial **durch** Einbringen einer Strahlungsquelle in den Innenraum des im Auskleidungsschlauch (1) angeordneten expandierten Luftsacks (64).

## Claims

1. Lining tube (1) for rehabilitating a defective sewer manhole (100) having a first section (110) with a first diameter and an adjoining second section (120) with an increased diameter, the lining tube comprising an inner film tube (10) and a radially expandable layer of fibrous material (20) arranged around it, which is impregnated with a curable reaction resin, the inner film tube (10) having a connecting section (12) extending in the longitudinal direction of the inner film tube (10), which connecting section (12) connects two mutually parallel circumferential sections (10a), (10b) of the inner film tube (10) to form a circumferentially closed inner film tube (10) having a defined nominal diameter, and wherein the connecting section (12) has a predetermined breaking point (14) which extends along the inner film tube (10) and can be opened in the peripheral direction by introducing a pressure medium into the inner film tube, in order to expand the inner film tube (10) and the layer of fibrous material (20) arranged thereon radially beyond the nominal diameter.

2. Lining tube according to claim 1,
**characterized in that** the inner film tube (10) comprises at least one flat film (16) formed into a tube, the longitudinal edges (17a), (17b) of which run at a distance from each other and are connected by a transparent film strip (18) glued or thermally welded onto the outside or inside.

3. Lining tube according to claim 1,
**characterized in in that** the inner film tube comprises at least one flat film (16) formed into a tube, the edge sections (16a), (16b) of which are connected to a transparent adhesive tape or are guided so as to overlap one above the other and are connected to one another by adhesive, a transparent double-sided adhesive tape or thermal welding.

4. Lining tube according to claim 1,
**characterized in that** the inner film tube (10) is a film tube that is seamless in the circumferential direction and has a circular cross section with a diameter that is more than 10%, preferably more than 40%, of the nominal diameter, and **in that** two parallel external peripheral sections (10a), (10b) of the seamless film tube (10) are joined in the area of the connecting section (12) by means of a transparent film strip (18) that is glued on or thermally welded on, forming a film loop (13) that runs in the peripheral direction of the inner film tube (10), extending over the length of the inner film tube (10), by means of a bonded or thermally welded transparent film strip (18) which spans the film loop (13).

5. Lining tube according to one of the preceding claims,
**characterized in that** the layer of fibrous material (20) comprises at least one helically and overlapping wound fibrous tape (22) or at least one fibrous tape (22) which extends in the longitudinal direction of the lining tube (1), and which is laid at its longitudinal edges in an overlapping manner, the fibrous material of which having an extensibility of more than 10%, in such a way that the tubular layer (20) of fibrous material can be expanded radially from a first diameter to a second diameter by introducing a pressure medium into the interior of the lining tube (1), wherein the size of the second diameter exceeds the size of the first diameter by at least 10%, in particular by more than 30%.

6. Lining tube according to one of the preceding claims,
**characterized in that** a longitudinal tension band (30) extending in the longitudinal direction of the lining hose (1) is arranged on the layer of fibrous material (20), which longitudinal tension band (30) contains glass fibres and/or glass fibre rovings running in the longitudinal direction of the lining hose (1) for absorbing and transmitting axial forces when the lining hose ( 1) is pulled into a sewer shaft (100), and/or that an outer film tube (40) and optionally a further outer film tube (50), which is impermeable in particular to UV light and is made of a reinforced, high-tensile material, in particular a fabric-reinforced plastic film, is arranged around the layer of fibrous material (20) for absorbing axial tensile forces.

7. Lining tube according to one of the preceding claims,
**characterized in that** inside the inner film sleeve (10) there is arranged a further inner film sleeve (60) made of an airtight transparent plastic material, which extends in the longitudinal direction of the lining sleeve (1) over the entire length thereof, wherein one end of the further inner film sleeve (60) is sealable in an airtight manner by a sealing element (62), in particular a knot or a cord or a cable tie wound around the outside of the further inner film tube, to form an air pocket (64) closed on one side.

8. Method for producing a lining tube according to one of the preceding claims,
**characterized by** the following method steps:
Forming a transparent flat plastic film (16) into a peripherally closed inner film tube (10) having a predetermined nominal diameter by adhesively bonding or welding of the longitudinal edges (17a, 17b) of the transparent flat plastic film (16) in an overlapping manner and/or by adhesively bonding or thermal welding of a transparent film strip (18) onto two adjacent outer peripheral sections (10a), (10b) of the flat plastic film (16) arranged in a tubular shape, wherein the peripheral sections extend parallel to one another, thereby producing a connecting section (12) which has a predetermined breaking point (14) extending in the longitudinal direction of the inner film tube (10), and arranging a layer of fibrous material (20) on the outside of the circumferentially closed tubular inner film tube (10) by helical winding or laying of at least one resin-impregnated fibrous tape (22), in particular glass-fibrous tape, in an overlapping manner around the inner film tube (10).

9. Method according to claim 8,
**characterized in that** a further transparent, peripherally airtight inner film sleeve (60) extending over the length of the lining sleeve (1) is placed on the flat plastic film (16) before the plastic flat film (16) is formed into the peripherally closed inner film sleeve (10).

10. Method for lining a defective sewer shaft (100) comprising a first shaft section (110) having a first diameter and an adjoining second shaft section (120) having an enlarged diameter,
**characterized by** the following method steps:
Attaching one end of a liner tube (1) according to one of claims 1 to 7 to a cup-shaped packer (200), raising the packer (200) with the liner tube (1) attached thereto into a vertical position above the sewer manhole (100), lowering the packer (200) with the liner tube (1) attached thereto into the sewer manhole (100), expanding an air bag (64) hermetically sealed in the area of the floor of the sewer shaft (100) inside the lining hose (1) by introducing a pressure medium, in particular compressed air, into the air bag (64), such that the lining hose (1) inside the sewer shaft (100) expands by opening the predetermined breaking point (14) in the connecting section (12) and rests against the inner wall of the expanded second channel section (120), and hardening of the reaction resin in the layer (20) of fibrous material by introducing a radiation source into the interior of the expanded air bag (64) arranged in the lining hose (1).

## Revendications

1. Gaine de chemisage pour la rehabilitation d'un puits d'égout défectueux (100), qui présente une première section de puits (110) avec un premier diamètre et une deuxième section de puits (120) s'y raccordant avec un diamètre élargi, comprenant un tuyau de film intérieur (10) ainsi qu'une couche disposée autour de celui-ci, pouvant être élargie radialement, en matériau fibreux (20), qui est imprégné d'une résine réactive durcissable,
le tuyau de film intérieur (10) présentant une section de liaison (12) s'étendant dans la direction longitudinale de celui-ci, qui relie deux sections périphériques (10a), (10b) parallèles l'une à l'autre du tuyau de film intérieur (10) pour former un tuyau de film intérieur (10) fermé sur sa circonférence avec un diamètre nominal défini, et la section de liaison (12) possédant un point destiné à la rupture (14) s'étendant le long du tuyau de film intérieur (10), qui peut être séparé dans la direction périphérique par l'introduction d'un milieu sous pression dans le tuyau de film intérieur, afin d'élargir le tuyau de film intérieur (10) et la couche de matériau fibreux (20) disposée sur celui-ci radialement au-delà du diamètre nominal.

2. Gaine de revêtement selon la revendication 1,
**caractérisé en ce que**
que le tube de film intérieur (10) comprend au moins un film plat (16) formé en un tube, dont les bords longitudinaux (17a), (17b) s'étendent à distance l'un de l'autre et sont reliés par une bande de film transparent (18) collée ou soudée thermiquement sur le côté extérieur ou le côté intérieur.

3. Gaine de chemisage selon la revendication 1,
**caractérisé en ce que**
le tube de film intérieur comprend au moins un film plat (16) formé en un tube, dont les sections de bord (16a), (16b) sont reliées par un ruban adhésif transparent ou sont guidées les unes sur les autres en se chevauchant et sont reliées entre elles par de la colle, un ruban adhésif double face transparent ou un soudage thermique.

4. Gaine de chemisage selon la revendication 1,
**caractérisé en ce que**
**en ce que** le tube de film intérieur (10) est un tube de film sans soudure dans la direction périphérique, qui possède une section transversale circulaire avec un diamètre qui est supérieur à 10%, de préférence supérieur à 40% du diamètre nominal, et **en ce que** deux sections périphériques extérieures (10a), (10b) du tuyau en feuille sans soudure (10) sont reliées entre elles dans la zone du tronçon de liaison (12) en formant une boucle de feuille (13) s'étendant dans la direction périphérique du tuyau en feuille intérieur (10) et sur la longueur du tuyau en feuille intérieur (10) par une bande de feuille transparente (18) collée ou soudée thermiquement, qui recouvre la boucle de feuille (13).

5. Gaine de chemisage selon l'une quelconque des revendications précédentes,
**caractérisé en ce que**
**en ce que** la couche de matériau fibreux (20) comprend au moins un ruban de fibres (22) enroulé en chevauchement hélicoïdal ou au moins un ruban de fibres (22) s'étendant dans la direction longitudinale du tuyau de chemisage (1), posé en chevauchement sur ses bords longitudinaux, dont le matériau fibreux possède une extensibilité de plus de 10 %, de telle sorte, que la couche tubulaire (20) en matériau fibreux peut être agrandie radialement d'un premier diamètre à un deuxième diamètre par introduction d'un fluide sous pression dans l'espace intérieur du tuyau de revêtement (1), dont la taille dépasse la taille du premier diamètre d'au moins 10 %, en particulier de plus de 30 %.

6. Gaine de chemisage selon l'une quelconque des revendications précédentes,
**caractérisé en ce que**
**en ce que** sur la couche de matériau fibreux (20) est disposée une bande de traction longitudinale (30) s'étendant dans la direction longitudinale du tuyau de revêtement (1), qui contient des fibres de verre et/ou des anneaux de fibres de verre s'étendant dans la direction longitudinale du tuyau de revêtement (1) pour absorber et transmettre des forces axiales lors de l'insertion du tuyau de revêtement (1) dans un puits de canal (100), et/ou **en ce que**, autour de la couche de matériau fibreux (20), est disposé un tuyau de film extérieur (40) et, en option, un autre tuyau de film extérieur (50), en particulier opaque à la lumière UV, en un matériau renforcé résistant à la traction, en particulier un film plastique renforcé par un tissu, pour absorber les forces de traction axiales.

7. Gaine de chemisage selon l'une des revendications précédentes,
**caractérisé en ce que en ce qu'**à l'intérieur du tuyau de film intérieur (10) est disposé un autre tuyau de film intérieur (60) s'étendant dans le sens longitudinal du tuyau de revêtement (1) sur toute sa longueur et constitué d'un matériau plastique transparent étanche à l'air, dont une extrémité peut être fermée de manière étanche à l'air par un élément d'étanchéité (62), en particulier un noeud ou un cordon ou un serre-câble enroulé autour de la face extérieure de l'autre tuyau de film intérieur, pour former une poche d'air (64) fermée d'un côté.

8. Procédé de fabrication d'une gaine selon l'une quelconque des revendications précédentes, **caractérisé par** les étapes de procédé suivantes Former un film plastique plat transparent (16) en un tube de film intérieur (10) fermé sur sa circonférence et présentant un diamètre nominal prédéterminé, par collage ou soudage par recouvrement des bords longitudinaux (17a, 17b) du film plastique plat transparent (16) et/ou par collage ou soudage thermique d'une bande de film transparent (18) sur deux sections périphériques extérieures voisines s'étendant parallèlement l'une à l'autre (10a), (10b) du film plat en matière plastique (16) disposé en forme de tuyau, en produisant une section de liaison (12) qui présente un point destiné à la rupture (14) s'étendant dans la direction longitudinale du tuyau en film intérieur (10), et disposition d'une couche de matériau fibreux (20) sur le côté extérieur du tube de film intérieur (10) fermé sur sa circonférence en forme de tuyau, par enroulement hélicoïdal en chevauchement ou par pose en chevauchement d'au moins un ruban de fibres (22) imprégné de résine, en particulier un ruban de fibres de verre, autour du tube de film intérieur (10).

9. Procédé selon la revendication 8,
**caractérisé en ce que**
**en ce qu'**un autre tube de film intérieur (60) transparent, fermé de manière étanche à l'air sur sa périphérie et s'étendant sur la longueur du tube de revêtement (1) est posé sur le film plat en plastique (16) avant que le film plat en plastique (16) ne soit formé en tube de film intérieur (10) fermé sur sa périphérie..

10. Procédé de revêtement d'un puits d'égout défectueux (100), qui présente une première section de puits (110) d'un premier diamètre et une deuxième section de puits (120) d'un diamètre élargi qui s'y raccorde,
**caractérisé par** les étapes de procédé suivantes :
Fixation d'une extrémité d'un gaine de chemisage (1) selon l'une des revendications 1 à 7 à un packer (200) en forme de pot, Soulèvement du packer (200) avec le tuyau de chemisage (1) qui y est fixé jusqu'à une position verticale au-dessus du puits de canalisation (100), Abaissement du packer (200) avec le tuyau de revêtement (1) qui y est fixé dans le puits de canalisation (100),
dilatation d'un sac d'air (64) fermé de manière étanche à l'air dans la zone du fond du puits de canalisation (100) à l'intérieur du tuyau de revêtement (1) par introduction d'un fluide sous pression, en particulier de l'air comprimé, dans le sac d'air (64), de telle manière, que le tuyau de revêtement (1) s'élargit radialement à l'intérieur du puits de canal (100) en séparant le point destiné à la rupture (14) dans la section de liaison (12) et s'applique contre la paroi intérieure de la deuxième section de canal élargie (120), et durcissement de la résine de réaction dans la couche (20) de matériau fibreux par introduction d'une source de rayonnement dans l'espace intérieur du sac à air expansé (64) disposé dans le tuyau de revêtement (1).
